# EUROPEAN PATENT SPECIFICATION

(11) **EP 4 433 922 B1**
(45) Date of publication and mention of the grant of the patent: **14.01.2026**
(21) Application number: 23711774.2
(22) Date of filing: 24.02.2023
(51) Int. Cl.: G06F 21/30, H04L 9/40

(54) **SECURE REMOTE CONNECTION ENABLING SYSTEM**
SICHERES SYSTEM ZUR ERMÖGLICHUNG EINER FERNVERBINDUNG
SYSTÈME D'ACTIVATION DE CONNEXION À DISTANCE SÉCURISÉE

(30) Priority: 09.03.2022 IT 202200004463
(43) Date of publication of application: 25.09.2024
(73) Proprietor: Cyber Grant Inc., Menlo Park, CA 94025 (US)
(72) Inventor: PASTORE, Valerio, 20121 Milano (IT)
(74) Representative: Praxi Intellectual Property Milano
(86) International application number: PCT/IB2023/051714
(87) International publication number: WO 2023/170504

(56) References cited:
- EP-A1- 3 202 114
- EP-B1- 3 202 114
- ANONYMOUS: "IEEE 802.1X - Wikipedia", 6 March 2022 (2022-03-06), XP055963492, Retrieved from the Internet <URL:https://en.wikipedia.org/w/index.php?title=IEEE_802.1X&oldid=1075498707> [retrieved on 20220921]

## Description

### TECHNICAL FIELD

The present invention relates to remote access techniques for establishing connections between remote computers.

### STATE OF THE ART

In computer science, remote access (or also, "remote control") is a method which allows, from a remote computer and without theoretical limitation of distance, to take control of another computer by viewing its screen and manipulating the functions of an input device such as a keyboard. This access can be performed at workstations or servers, depending on the capabilities of the software used.

Widely used is the Remote Desktop Protocol (RDP), a proprietary network protocol developed by Microsoft, which allows remote connection from one computer to another using the Windows graphical user interface (GUI), using TCP and UDP port 3389 by default.

RDP clients exist for most versions of Microsoft Windows, Linux, Unix, macOS, Android, iOS. Official RDP servers exist for Windows operating systems, although some also exist for Unix-Like systems. The RDP application included with Windows is called Remote Desktop Connection.

The Applicant has noticed that remote connections present critical security issues for the information accessible from the computer to which a remote user connects. For example, such critical issues arise in the case of remote working, when an employee of a company obtains, through his or her own user computer, remote access to a company server or workstation that often stores (either directly or via a network into which it is plugged) sensitive information for the company itself (e.g. industrial projects, commercial or financial information).

One of the most common attacks that occur in Remote Desktop sessions is the man-in-the-middle attack, when a hacker (attacker) secretly observes and probably alters the communication between two parties.

Another type of attack is information leakage when a temporary user or consultant connects from a computer that in such cases physically resides in the user's home. Such information leakage may take the form, for instance, of copying remote documents or sensitive information in the form of text onto one's own device.

Another situation is that of RDP access by temporary (or non-temporary) consultants who could load viruses of any kind, such as ransonware, onto the remote computer.

A situation of lack of control of the remote computer (occurring, for instance, during breaks from work or at night) makes the company server or workstation potentially accessible to unauthorised persons through 'brute force' attack activities, such as gaining access to the system through thousands of authentication attempts per minute. The latter is a prevalent type of attack in the Remote Desktop space.

EP3202114 discloses a system where single sign on is performed by an intermediary device for an RDP session of a client. The client is granted RDP access to an RDP host without requiring a custom virtual private network (VPN) and/or an RDP client. A user/client authenticates only once when establishing a connection to the intermediary device (e.g., NetScaler Gateway) and subsequent SSO to an RDP host is performed by the intermediary device.

### SUMMARY OF THE INVENTION

The present invention addresses the problem of providing a remote connection enablement system that offers greater security against attempted access by authorised and unauthorised persons than is achievable by conventional techniques.

It is an object of the present invention to provide a remote connection enabling system as described by claim 1 and preferred embodiments thereof as defined by claims 2-8.

### BRIEF DESCRIPTION OF THE DESIGN

The present invention is hereinafter described in detail, by way of example but not limitation, with reference to the appended drawings, in which:
- figure 1 shows schematically an example of a remote connection enabling system comprising at least one user computer and at least one remote computer;
- figure 2 shows an example of a remote connection enabling method suitable for the system of figure 1;

### DETAILED DESCRIPTION

In this description, similar or identical elements or components will be indicated in the figures by the same identifying symbol.

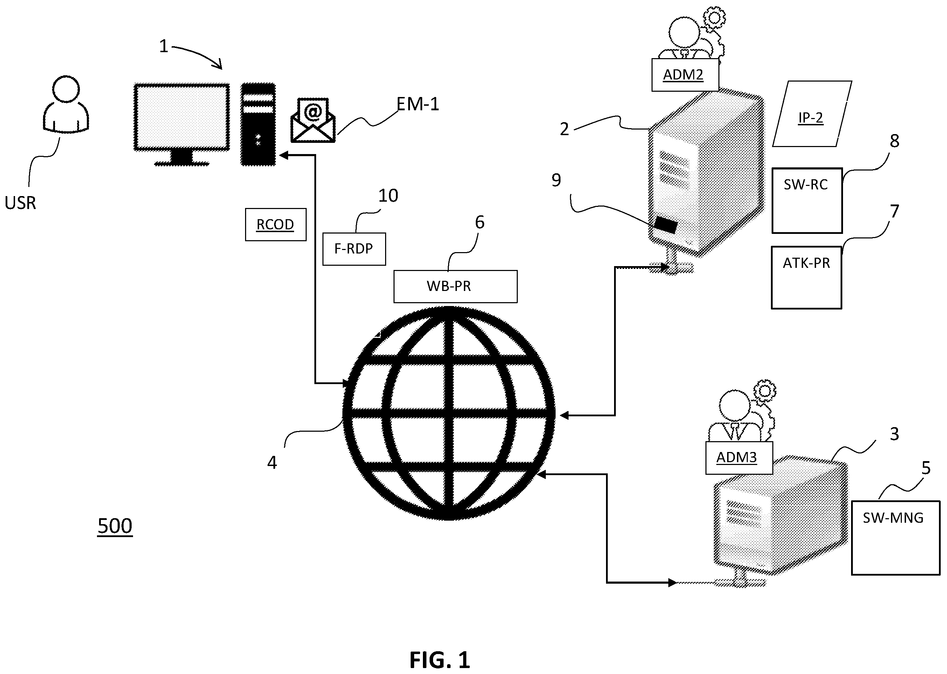

Figure 1 schematically shows an example of a remote connection enablement system 500 comprising at least one user computer 1 associated with a user USR, at least one remote computer 2, at least one management computer 3, such that they can communicate with each other via a telecommunication network 4 for the exchange of data/information. The telecommunication network 4 is, for example, an Internet network.

User computer 1 may be, for example, a personal computer, lap top or tablet, or a mobile phone (e.g. smartphone), in use by the user USR, with an e-mail address EM-1 or other user identifier such as a mobile phone number.

Remote computer 2 may be a server computer, a personal computer or a virtual machine, with which a corresponding administrator ADM2is associated.

Remote computer 2 is such as to allow remote access and thus the establishment of a remote connection. As is well known, remote access is a type of connection that is made between two or more spaced-out computers by linking them together normally via a computer network such as, for example, via the Internet (in which case, a remote connection is obtained), allowing more or less limited control of one of the two machines by operating from one machine on the other.

Remote computer 2 is equipped with a corresponding remote access service software 8 (SW-RC). For example, such service software 8 is configured in accordance with the network protocol RDP (Remote Desktop Protocol) which is, as is known, a proprietary network protocol developed by Microsoft, which allows remote connection from one computer to another using the Windows graphical user interface (GUI). For such a connection, at least one RDP port 9 is used (i.e., as is known, TCP port and UDP 3389 port). The service software 8 controls the closing and opening of RDP port 9.

In addition, a protection software application 7 (ATK-PR) is installed at remote computer 2, which is configured to ensure that a remote connection is only permitted for authorised computers, in accordance with the requirements and manner described below.

According to the example, user computer 1 is also equipped with service software configured according to the RDP (Remote Desktop Protocol) network protocol.

Note that protection application 7 (ATK-PR) is such that the initial state of RDP port 9 is 'off' (i.e. port 9 is closed), and thus unreachable by any connection attempt.

Consider the example situation in which remote computer 2 is a company server and the user USR is an employee who must use user computer 1 to connect remotely to remote computer 2, i.e., resulting in remote access with the establishment of a remote connection, which sees the opening of a remote session.

The management computer 3 may be, for example, a server computer at which resides a management software 5 (SW-MNG) configured to manage, also via a related administrator ADM3, a protection service of the remote computer 2. The management software 5 of the management computer 3 is configured to exchange data/information with the protection application 7 installed on the remote computer 2. According to the example, the management computer 3 may be a central computer administered by a company providing a remote connection protection service.

In particular, the management computer 3 may operate a web portal 6 (WB-PR) to which the protection application 7 of the remote computer 2 and the user USR may be connected via the user computer 1.

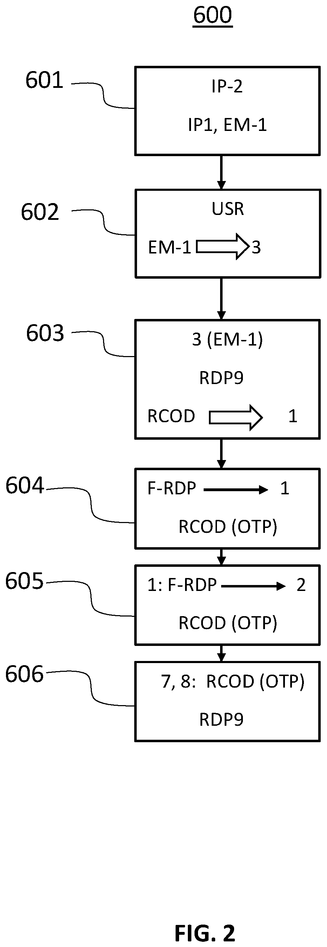

The system 500 operates according to a method of enabling a remote connection 600, an example of which is described below with reference to the flowchart in figure 2.

The method 600 comprises a registration step 601 at the management computer 3 of the user computer 1 and the remote computer 2. Specifically, at a memory of the management computer 3, IP identification data 2 of the remote computer 2 (e.g. its IP address) is recorded. In this recording, an access port identifier for the remote connection of the remote computer 2 (according to the example, access port 9) is also recorded.

In addition, into the management computer 3, the e-mail address EM-1 of the user USR is registered, associating it with the specific remote computer 2, to which the user USR will want to connect. This e-mail address is an example of an identifier of the user USR that can be used. Advantageously, an address IP-1 of user computer 1 is also stored, associating it with that of the remote computer 2. For example, this registration operation can be carried out by the administrator ADM2 of the remote computer 2 via web portal 6.

In a step of connecting to portal 602, the user USR of the user computer 1 proceeds to connect to the web portal 6 and enter his or her e-mail address EM-1 into it so as to be recognised by the management computer 3.

If the e-mail address EM-1 of the user USR is recognised (first verification step 603), the management computer 3, by means of the management software 5, the security application 7 and the service software 8 of the remote computer 2, enables the opening of the RDP port 9 i.e., enables the possibility of an access to the remote computer 2 for a remote session requested by the USR user.

Advantageously, this opening of the RDP 9 port is temporary, i.e. it is only valid for a predetermined time interval (e.g. 10 minutes). If the e-mail address entered is not recognised (i.e. it is detected as different from that pre-registered EM-1), RDP port 9 is kept closed.

Preferably, the method 600 comprises further steps of verification and/or recognition of the user and/or user computer 1.

According to an example (symbolically illustrated in the figure, within the first verification step 603), following the above-mentioned acknowledgement, the user USR receives at the corresponding e-mail address EM-1 an acknowledgement code RCOD (e.g., an OTP, One Time Password), sent by the management computer 3, which registers it by associating it with the address IP-1 of the user computer 1.

The USR user (in a data download phase 604) downloads into the user computer 1 from web portal 6 an RDP file 10 (F-RDP) in the form of a text file containing identification data of the remote computer 2 (e.g., its IP address, IP-2) and the RDP port 9 to be used for the connection.

It should be noted that such a data download phase 604 is, advantageously, repeated with each connection request and in particular it is repeated each time the session of the remote computer 2 expires, with consequent closure of the RDP port 9. Another situation in which a further download to the user computer 1 from the web portal 6 of the RDP file 10 is required is when the IP address of the user computer 1 is changed, which no longer corresponds to the address IP-1 recorded in the registration phase 601, or also when the windows credentials of a local user are changed.

From RDP file 10, the user USR launches (launch step 605) a connection to the remote computer 2 by entering, for example, other credentials in order to be recognised by the network 4 (in particular, its own Active Directory credentials). During the access of the user USR to the remote computer 2 (access managed by the security application 7, via the user computer 1), the user enters the recognition code RCOD (for example, in a modal window, which cannot be deleted).

In a second verification step 606, the recognition code RCOD is evaluated by the protection application 7 (residing at the remote computer 2) in accordance with the management software 5 of the management computer 3, and if it is recognised, the temporarily granted access is confirmed, resulting in a remote session. The protection application 7 cooperates with the service software 8 of the remote computer 2 to confirm the access.

In the event that the recognition code RCOD is not recognised, an automatic disconnection is carried out and, in particular, protection application 7, via the service software 8 of the remote computer 2, closes the RDP port 9 preventing access to the remote computer 2.

Advantageously, the method 600 further comprises a connection verification procedure such that it confirms whether or not the computer of a user with which the remote computer 2 has established the remote connection corresponds to the registered computer according to the registration step 601.

Note that in implementing method 600, the protection application 7 applies "rules" downloaded from the management computer 3.

When the USR user enters the recognition code RCOD (launch step 605, described above), the remote computer 2 (via the protection application 7) requests to the management computer 3 the user computer identifier (e.g., its IP-1), associated with that particular recognition code RCOD (as provided in the first verification step 603).

In addition, the remote computer 2 is informed by the management computer 3 of the RDP connection port 9 (enabled at remote computer 2), as registered at management computer 3.

The protection application 7 of the remote computer 2 verifies that the incoming remote connection on the RDP port 9 comes from a computer having the identifier IP-1 of the user computer 1: if so, the connection is granted; if not, the connection is disabled and the RDP port 9 is closed.

In a particularly advantageous form of implementation, there is also a control procedure managed by protection application 7 whereby a remote connection already established is disabled (with closure of RDP port 9) if no activity is detected, i.e., if it is inactive. This inactivity (which may occur, for example, at night) can be detected by monitoring the user interfaces of user computer 1 (monitoring carried out, from remote computer 2 through protection application 7, in accordance with the rules defined by management computer 3 with its management software 5).

In addition, it is possible to decide that the automatic disabling of the remote connection only takes place after a preset time interval of inactivity. The value of the time interval can be set by the administrator ADM2of remote computer 2 on the web portal 6.

To re-establish the connection, the user USR of the user computer 1 logs back on to web portal 6 and re-enters the e-mail address EM-1, unless it is still logged in. If security application 7 detects the same user computer identifier (i.e. IP-1 address) as the last connection, access is granted and RDP port 9 is opened.

A further time interval may be set between a subsequent connection request and the last connection request, within which a new recognition code RCOD is not required. After the expiry of this further time interval, the user USR, via the web portal 6, can request a new recognition code (RCOD) to be used to complete the remote connection in the same way as described above.

Preferably, there is also a procedure for deactivating shared folders which is carried out, advantageously, when the protection application 7 is installed on the remote computer 2 and is activated. According to this procedure, the protection application 7 removes all folder shares with other computers that belong to the same local network to which remote computer 2 belongs. This prevents a hacker from uploading files to a shared local folder and then accessing it remotely, e.g. via the Server Message Bloc (SMB) protocol, which is mainly used by Microsoft Windows systems.

For example, the *netshare* command allows the list of shared resources on the local network to be obtained and the netshare/delete command allows the sharing to be removed.

It should be noted that according to particular forms of implementation, one or more restrictions may be adopted that limit the activities that the user USR may perform when user computer 1 is in a remote session with remote computer 2. Examples of such possible restrictions that can be implemented at the remote computer 2 via the security software application 7 are given below.

Advantageously, it is possible to provide that remote computer 2 cannot surf the Internet (except, for example, to connect to a secure sharing portal authorised by centralised policies and configurable via web portal 6, associated with management computer 3).

Disabling/restricting Internet browsing can be done by software application 7. Instead, Internet browsing can be maintained for user computer 1. This restriction of browsing reduces risks such as: contracting online viruses (e.g. ransomware) or sending out confidential information.

In addition, it is possible to provide that services listening on remote computer 2 can be switched off in order not to allow third-party access via other services enabled on remote computer 2.

It is also possible to deactivate for the USR user those activities that could impair the proper functioning of remote computer 2. For example, such activities may be: deleting files that are responsible for the proper functioning of remote computer 2, uploading potential malicious files or scripts from user computer 1 (e.g. files with the following extensions: .com, .bat, .exe, .hta, .ocx, .pif, .sys, .vbs and .wsf).

With reference to possible restrictions, in connection with the leakage of sensitive information, it may also be possible to deny any copying of data contained on remote computer 2 to user computer 1, even when the user USR has access rights to remote computer 2.

Another possible restriction may be to allow remote access to remote computer 2 only for those user computers that are in certain geographical locations and/or only for specific IP addresses.

The remote connection enablement system 500 and method 600 described above are very advantageous because they considerably increase the security of a remote connection to be established. The verification of the identity of the user wishing to establish a remote connection with the computer to be protected and the possibility of refusing the connection by keeping the access port associated with the remote connection service closed, are solutions that lend particular security to the system.

Another advantage is related to the use of more than one user identification code and the fact that further verification of these codes can be carried out. Also advantageous is the solution that provides for an automatic disconnection in the event of user computer inactivity.

It should be noted that the restrictions described above are also particularly advantageous. In fact, the application of such restrictions makes it possible to achieve a level of protection that renders the computer itself unassailable from any point of entry, not only by potential hackers/ attackers, but also by users authorised to access the remote computer 2, thus achieving a de facto 'system hardening'.

Legend of symbols used in the figures
- remote connection enabling system 500
- user computer 1
- remote computer 2
- management computer 3,
- telecommunications network 4
- management software 5
- user USR
- e-mail address EM-1
- remote computer administrator ADM2
- management computer administrator ADM3
- web portal 6
- security software application 7
- service software 8
- RDP port 9
- remote computer identification data IP-2
- user computer identification data IP-1
- recognition code RCOD

## Claims

1. Remote connection enabling system (500) comprising:
- a user computer (1) connectable to a telecommunications network (4);
- a remote computer (2) connectable to the user computer (1) by means of the telecommunications network (4) and provided with:
a remote connection service software (8) configured to control a remote connection access port (9) of the remote computer (2), wherein said access port (9) and remote connection service software (8) are in accordance with RDP, Remote Desktop Protocol;
a protection software (7) of said remote connection configured to interact with said service software (8);
- a management computer (3) connectable to the telecommunications network (4) and provided with a management software (8) configured to interact with said protection software (7);
wherein the user computer (1), the protection software (7) and the management software (8) are configured to:
register (601) with the management computer (3) a user computer identifier (1), a user identifier (EM-1), and an identifier (IP-1) of the remote computer (2), associating them with each other;
provide (602) by the user computer (1) to the management computer (3) via the telecommunications network (4) the user identifier (EM-1);
recognize (602) by the management computer (3) the user identifier (EM-1) and open via the protection software (7) and the management software (8) the access port (9) of remote connection of the user computer (1) to the remote computer (2);
after recognizing (602) the user identifier (EM-1), send (604) from the management computer (3) to the user computer (1) a recognition code (RCOD);
send (604) from the management computer (3) to the user computer (1) a connection file (10) containing said identifier (IP-1) of the remote computer (2) and an identifier of the access port (9) to be used for the connection;
launch (605) by the user (USR) and *via* the user computer (1) and employing the connection file (10) a request for remote connection to said remote computer (2);
enter (605) by the user (USR) in a dialog box managed by the protection software (7) the recognition code (RCOD);
evaluate (606) by the protection software (7) the recognition code (RCOD) entered by the user;
keep (606) the access port (9) open when the recognition code (RCOD) is recognized by the protective software (7); and
close (606) the access port (9) when the recognition code (RCOD) is not recognized by the security software (7).

2. System (500) according to claim 1, wherein the protection software (7) and the management software (8) are configured to:
receive to the management computer (3) *via* the telecommunications network (4) an additional user identifier different from said user identifier (EM-1);
detect by the management computer (3) that the additional user identifier is different from said user identifier (EM-1);
keep the access port (9) closed by means of the security software (7) and the management software (8).

3. System (500) according to claim 1, wherein the protection software (7) and the management software (8) are configured to:
verify, based on said identifier (IP-1) of said user computer (1), that a remote computer port (2) engaged in a remote connection is engaged with said user computer (1).

4. System (500) according to claim the claim 1, wherein the system is configured to:
establish a remote connection between the user computer (1) and the remote computer (2) via said access port (9);
verify by the protection software (7) that said remote connection is active;
disable the remote connection by closing the access port (9) when the remote connection is deactivated.

5. System (500) according to claim the claim 4, wherein the system is configured to:
disable by the protection software (7) said remote connection, closing the access port (9), when the remote connection results inactive for a time longer than a predetermined interval.

6. System (500) according to claim the claim 1, wherein said protection software (7) is configured to:
disable a folder share on a local network to which the remote computer belongs (2).

7. System (500) according to claim the claim 1, wherein said protection software (7) is configured to apply at least one of the following restrictions to the remote computer (2) when in remote session with the user computer (1):
inhibiting/restricting browsing of the Internet-type computer network (4) via the remote computer (2);
inhibit services listening on the remote computer (2) so as not to allow access to third parties via additional services enabled on the remote computer (2);
disable activities on the user's computer (1) that may impair the proper functioning of the remote computer (2) including: deletion of files responsible for the proper functioning of the remote computer (2), uploading of potential malicious files or scripts from the user's computer (1);
inhibiting copying operations of specific data contained in the remote computer (2) to the user computer (1),
authorizing remote access to the remote computer (2) only for the user computer (1) that is located in certain geographical locations and/or only has a specific IP address.

8. System (500) according to claim the claim 1, wherein:
- said telecommunications network (4) is an Internet network.

## Patentansprüche

1. Fernverbindungsaktivierungssystem (500), umfassend:
- einen Benutzercomputer (1), der mit einem Telekommunikationsnetzwerk (4) verbindbar ist;
- einen Ferncomputer (2), der mit dem Benutzercomputer (1) mittels des Telekommunikationsnetzwerks (4) verbindbar ist und versehen ist mit:
einer Fernverbindungsdienstsoftware (8), die konfiguriert ist, um einen Fernverbindungszugriffsport (9) des Ferncomputers (2) zu steuern, wobei der Zugriffsport (9) und die Fernverbindungsdienstsoftware (8) dem RDP, Remote Desktop Protocol, entsprechen;
einer Schutzsoftware (7) der Fernverbindung, die konfiguriert ist, um mit der Dienstsoftware (8) zu interagieren;
- einen Verwaltungscomputer (3), der mit dem Telekommunikationsnetzwerk (4) verbindbar ist und mit einer Verwaltungssoftware (8) versehen ist, die konfiguriert ist, um mit der Schutzsoftware (7) zu interagieren;
wobei der Benutzercomputer (1), die Schutzsoftware (7) und die Verwaltungssoftware (8) konfiguriert sind zum:
Registrieren (601), bei dem Verwaltungscomputer (3), einer Benutzercomputer-Kennung (1), einer Benutzerkennung (EM-1) und einer Kennung (IP-1) des Ferncomputers (2), wobei diese miteinander verknüpft werden;
Bereitstellen (602) der Benutzerkennung (EM-1) durch den Benutzercomputer (1) an den Verwaltungscomputer (3) über das Telekommunikationsnetzwerk (4);
Erkennen (602) der Benutzerkennung (EM-1) durch den Verwaltungscomputer (3) und Öffnen, über die Schutzsoftware (7) und die Verwaltungssoftware (8), des Zugriffsports (9) der Fernverbindung des Benutzercomputers (1) zu dem Ferncomputer (2);
nach dem Erkennen (602) der Benutzerkennung (EM-1), Senden (604) eines Erkennungscodes (RCOD) von dem Verwaltungscomputer (3) an den Benutzercomputer (1);
Senden (604), von dem Verwaltungscomputer (3) an den Benutzercomputer (1), einer Verbindungsdatei (10), die die Kennung (IP-1) des Ferncomputers (2) und eine Kennung des Zugriffsports (9) enthält, die für die Verbindung verwendet werden sollen;
Starten (605), durch den Benutzer (USR) und über den Benutzercomputer (1) und unter Einsatz der Verbindungsdatei (10), einer Anfrage für eine Fernverbindung zu dem Ferncomputer (2);
Eingeben (605) des Erkennungscodes (RCOD) durch den Benutzer (USR) in ein Dialogfeld, das durch die Schutzsoftware (7) verwaltet wird;
Bewerten (606), durch die Schutzsoftware (7), des durch den Benutzer eingegebenen Erkennungscodes (RCOD);
Offenhalten (606) des Zugriffsports (9), wenn der Erkennungscode (RCOD) durch die Schutzsoftware (7) erkannt wird; und
Schließen (606) des Zugriffsports (9), wenn der Erkennungscode (RCOD) nicht durch die Sicherheitssoftware (7) erkannt wird.

2. System (500) nach Anspruch 1, wobei die Schutzsoftware (7) und die Verwaltungssoftware (8) konfiguriert sind zum:
Empfangen, an dem Verwaltungscomputer (3) über das Telekommunikationsnetzwerk (4), einer zusätzlichen Benutzerkennung, die sich von der Benutzerkennung (EM-1) unterscheidet;
Erkennen, durch den Verwaltungscomputer (3), dass sich die zusätzliche Benutzerkennung von der Benutzerkennung (EM-1) unterscheidet;
Geschlossenhalten des Zugriffsports (9) mittels der Sicherheitssoftware (7) und der Verwaltungssoftware (8).

3. System (500) nach Anspruch 1, wobei die Schutzsoftware (7) und die Verwaltungssoftware (8) konfiguriert sind zum:
Überprüfen, basierend auf der Kennung (IP-1) des Benutzercomputers (1), dass ein Ferncomputer-Port (2), der in eine Fernverbindung eingebunden ist, mit dem Benutzercomputer (1) verbunden ist.

4. System (500) nach Anspruch 1, wobei das System konfiguriert ist zum:
Herstellen einer Fernverbindung zwischen dem Benutzercomputer (1) und dem Ferncomputer (2) über den Zugriffsport (9);
Überprüfen, durch die Schutzsoftware (7), dass die Fernverbindung aktiv ist;
Deaktivieren der Fernverbindung durch Schließen des Zugriffsports (9), wenn die Fernverbindung deaktiviert ist.

5. System (500) nach Anspruch 4, wobei das System konfiguriert ist zum:
Deaktivieren der Fernverbindung durch die Schutzsoftware (7), wobei der Zugriffsport (9) geschlossen wird, wenn die Fernverbindung für eine Zeit länger als ein vorbestimmtes Intervall inaktiv ist.

6. System (500) nach Anspruch 1, wobei die Schutzsoftware (7) konfiguriert ist zum:
Deaktivieren einer Ordnerfreigabe in einem lokalen Netzwerk, zu dem der Ferncomputer (2) gehört.

7. System (500) nach Anspruch 1, wobei die Schutzsoftware (7) konfiguriert ist, um mindestens eine der folgenden Beschränkungen auf den Ferncomputer (2) anzuwenden, wenn dieser sich in einer Fernsitzung mit dem Benutzercomputer (1) befindet:
Unterbinden/Beschränken des Browsens in dem Computernetzwerk vom Internettyp (4) über den Ferncomputer (2);
Unterbinden von Diensten, die auf dem Ferncomputer (2) warten, um Dritten keinen Zugriff über zusätzliche auf dem Ferncomputer (2) aktivierte Dienste zu ermöglichen;
Deaktivieren von Aktivitäten auf dem Benutzercomputer (1), die das ordnungsgemäße Funktionieren des Ferncomputers (2) beeinträchtigen können, einschließlich: Löschen von Dateien, die für das ordnungsgemäße Funktionieren des Ferncomputers (2) verantwortlich sind, Hochladen von potentiell schädlichen Dateien oder Skripten von dem Benutzercomputer (1);
Unterbinden von Kopiervorgängen spezifischer Daten, die in dem Ferncomputer (2) enthalten sind, auf den Benutzercomputer (1),
Autorisieren eines Fernzugriffs auf den Ferncomputer (2) nur für den Benutzercomputer (1), der sich an bestimmten geografischen Standorten befindet und/oder nur eine spezifische IP-Adresse aufweist.

8. System (500) nach Anspruch 1, wobei:
- das Telekommunikationsnetzwerk (4) ein Internetnetzwerk ist.

## Revendications

1. Système d'activation de la connexion à distance (500) comprenant :
- un ordinateur utilisateur (1) pouvant être connecté à un réseau de télécommunications (4) ;
- un ordinateur distant (2) pouvant être connecté à l'ordinateur utilisateur (1) au moyen du réseau de télécommunications (4) et doté de :
un logiciel de service de connexion à distance (8) configuré pour commander un port d'accès de connexion à distance (9) de l'ordinateur distant (2), dans lequel ledit port d'accès (9) et le logiciel de service de connexion à distance (8) sont conformes au protocole RDP, Remote Desktop Protocol ;
un logiciel de protection (7) de ladite connexion à distance configuré pour interagir avec ledit logiciel de service (8) ;
- un ordinateur de gestion (3) pouvant être connecté au réseau de télécommunications (4) et doté d'un logiciel de gestion (8) configuré pour interagir avec ledit logiciel de protection (7) ;
dans lequel l'ordinateur utilisateur (1), le logiciel de protection (7) et le logiciel de gestion (8) sont configurés pour :
enregistrer (601) auprès de l'ordinateur de gestion (3) un identifiant d'ordinateur utilisateur (1), un identifiant utilisateur (EM-1) et un identifiant (IP-1) de l'ordinateur distant (2), en les associant l'un à l'autre ;
fournir (602) par l'ordinateur utilisateur (1) à l'ordinateur de gestion (3), par le biais du réseau de télécommunications (4), l'identifiant utilisateur (EM-1) ;
reconnaître (602) par l'ordinateur de gestion (3) l'identifiant utilisateur (EM-1) et ouvrir, par le biais du logiciel de protection (7) et du logiciel de gestion (8), le port d'accès (9) de la connexion à distance de l'ordinateur utilisateur (1) à l'ordinateur distant (2) ;
après avoir reconnu (602) l'identifiant utilisateur (EM-1), envoyer (604) de l'ordinateur de gestion (3) à l'ordinateur utilisateur (1) un code de reconnaissance (RCOD) ;
envoyer (604) de l'ordinateur de gestion (3) à l'ordinateur utilisateur (1) un fichier de connexion (10) contenant ledit identifiant (IP-1) de l'ordinateur distant (2) et un identifiant du port d'accès (9) à utiliser pour la connexion ;
lancer (605) par l'utilisateur (USR) et *par le biais de* l'ordinateur utilisateur (1) et en utilisant le fichier de connexion (10) une demande de connexion à distance audit ordinateur distant (2) ;
saisir (605) par l'utilisateur (USR) dans une boîte de dialogue gérée par le logiciel de protection (7) le code de reconnaissance (RCOD) ;
évaluer (606) par le logiciel de protection (7) le code de reconnaissance (RCOD) saisi par l'utilisateur ;
maintenir (606) le port d'accès (9) ouvert lorsque le code de reconnaissance (RCOD) est reconnu par le logiciel de protection (7) ; et
fermer (606) le port d'accès (9) lorsque le code de reconnaissance (RCOD) n'est pas reconnu par le logiciel de sécurité (7).

2. Système (500) selon la revendication 1, dans lequel le logiciel de protection (7) et le logiciel de gestion (8) sont configurés pour :
recevoir de l'ordinateur de gestion (3), *par le biais* du réseau de télécommunications (4), un identifiant utilisateur supplémentaire différent dudit identifiant utilisateur (EM-1) ;
détecter par l'ordinateur de gestion (3) que l'identificateur utilisateur supplémentaire est différent dudit identifiant utilisateur (EM-1) ;
maintenir le port d'accès (9) fermé au moyen du logiciel de sécurité (7) et du logiciel de gestion (8).

3. Système (500) selon la revendication 1, dans lequel le logiciel de protection (7) et le logiciel de gestion (8) sont configurés pour :
vérifier, en fonction dudit identifiant (IP-1) dudit ordinateur utilisateur (1), qu'un port d'ordinateur distant (2) engagé dans une connexion à distance est engagé avec ledit ordinateur utilisateur (1).

4. Système (500) selon la revendication 1, dans lequel le système est configuré pour :
établir une connexion à distance entre l'ordinateur utilisateur (1) et l'ordinateur distant (2) par le biais dudit port d'accès (9) ;
vérifier par le logiciel de protection (7) que ladite connexion à distance est active ;
désactiver la connexion à distance en fermant le port d'accès (9) lorsque la connexion à distance est désactivée.

5. Système (500) selon la revendication 4, dans lequel le système est configuré pour :
désactiver par le logiciel de protection (7) ladite connexion à distance, en fermant le port d'accès (9), lorsque la connexion à distance reste inactive pendant une durée supérieure à un intervalle prédéterminé.

6. Système (500) selon la revendication 1, dans lequel ledit logiciel de protection (7) est configuré pour :
désactiver un partage de dossier sur un réseau local auquel appartient l'ordinateur distant (2).

7. Système (500) selon la revendication 1, dans lequel ledit logiciel de protection (7) est configuré pour appliquer au moins l'une des restrictions suivantes à l'ordinateur distant (2) lorsqu'il est en session à distance avec l'ordinateur utilisateur (1) :
inhiber/limiter la navigation sur le réseau informatique de type Internet (4) par le biais de l'ordinateur distant (2) ;
inhiber les services à l'écoute de l'ordinateur distant (2) afin de ne pas permettre l'accès à des tiers par le biais de services supplémentaires activés sur l'ordinateur distant (2) ;
désactiver les activités sur l'ordinateur utilisateur (1) susceptibles de nuire au bon fonctionnement de l'ordinateur distant (2), y compris : la suppression de fichiers responsables du bon fonctionnement de l'ordinateur distant (2), le téléchargement de fichiers ou de scripts potentiellement malveillants à partir de l'ordinateur utilisateur (1) ;
empêcher les opérations de copie de données spécifiques contenues dans l'ordinateur distant (2) vers l'ordinateur utilisateur (1),
autoriser l'accès à distance à l'ordinateur distant (2) uniquement pour l'ordinateur utilisateur (1) qui est situé dans certaines zones géographiques et/ou disposant d'une adresse **IP** spécifique.

8. Système (500) selon la revendication 1, dans lequel :
- ledit réseau de télécommunications (4) est un réseau Internet.
